# EUROPEAN PATENT APPLICATION

(11) **EP 4 216 135 A1**
(43) Date of publication of application: **26.07.2023**
(21) Application number: 22215925.3
(22) Date of filing: 22.12.2022
(51) Int. Cl.: G06Q 30/0201, G06Q 30/0283, G06Q 30/0601, G06Q 40/08

(54) **INFORMATION PROCESSING DEVICE, INFORMATION PROCESSING METHOD, AND RECORDING MEDIUM STORING AN INFORMATION PROCESSING PROGRAM**

(30) Priority: 21.01.2022 JP 2022007825
(71) Applicant: Toyota Jidosha Kabushiki Kaisha, Toyota-shi, Aichi-ken, 471-8571 (JP)
(72) Inventor: YAMAGUCHI, Kenji, Toyota-shi, 471-8571 (JP); KUZUYA, Yusuke, Toyota-shi, 471-8571 (JP); JIKUHARA, Yoshikazu, Toyota-shi, 471-8571 (JP); SAKAKIBARA, Kosuke, Toyota-shi, 471-8571 (JP); HAYASHI, Takashi, Toyota-shi, 471-8571 (JP)
(74) Representative: J A Kemp LLP

(57) **Abstract**

An information processing device(20) including: an acquiring section(21A) acquiring vehicle information relating to a vehicle(60); an evaluating section(21B) evaluating a value of structural information, which includes the vehicle information acquired by the acquiring section(21A), by using a predetermined evaluation standard; and a presenting section(21C) presenting a user of the vehicle(60) with the value of the structural information evaluated by the evaluating section(21B).

## Description

### BACKGROUND

### Technical Field

The present disclosure relates to an information processing device, an information processing method and a recording medium storing an information processing program.

### Related Art

Japanese Patent Application Laid-Open (JP-A) No. 2005-190233 discloses a technique of providing incentives corresponding to driving behaviors. For example, a technique in which a discount on a toll is obtained as economic value due to a vehicle driving in a driving lane on a highway is disclosed in JP-A No. 2005-190233.

Here, it is known that there is value in information relating to a vehicle, such as the driving information of the driving lane on a highway in JP-A No. 2005-190233. For example, at the time of selling a vehicle, if there exists, as information relating to the vehicle, information about the maintenance history of the vehicle, information about the absence/presence of damage to the vehicle body, and the like, work on the part of the vehicle purchasing agent is reduced, and therefore, it can be expected that the sales price will improve.

Accordingly, it is desirable to collect a large amount of information relating to a vehicle in order to improve the value of the vehicle. However, if the user of vehicle cannot grasp the value of the information, it is difficult to have the user collect a large amount of information.

### SUMMARY

An object of the present disclosure is to provide an information processing device, an information processing method and a recording medium storing an information processing program that enable a user of a vehicle to understand the value of information relating to the vehicle.

An information processing device of a first aspect includes: an acquiring section acquiring vehicle information relating to a vehicle; an evaluating section evaluating a value of structural information, which includes the vehicle information acquired by the acquiring section, by using a predetermined evaluation standard; and a presenting section presenting a user of the vehicle with the value of the structural information evaluated by the evaluating section.

In the information processing device of the first aspect, the acquiring section acquires vehicle information relating to the vehicle. Further, the evaluating section evaluates the value of structural information, which includes the vehicle information acquired by the acquiring section, by using a predetermined evaluation standard. Then, the presenting section presents the user of the vehicle with the value of the structural information that has been evaluated by the evaluating section. Due thereto, in this information processing device, the user of the vehicle can be made to know of the value of structural information as information relating to the vehicle.

In an information processing device of a second aspect, in the first aspect, the evaluating section evaluates the value of the structural information by using, as the predetermined evaluation standard, an inclusion rate that is a proportion of the vehicle information included in the structural information, among vehicle information that can be included in the structural information.

In the information processing device of the second aspect, the evaluating section evaluates the value of the structural information by using, as the predetermined evaluation standard, the inclusion rate that is the proportion of the vehicle information included in the structural information, among vehicle information that can be included in the structural information. Due thereto, in this information processing device, the greater the number of vehicle information that are included in the structural information, the higher the value of the structural information can become.

In an information processing device of a third aspect, in the second aspect, the presenting section presents the user with the inclusion rate and vehicle information that is not included in the structural information.

In the information processing device of the third aspect, the presenting section presents the user with the inclusion rate and vehicle information that is not included in the structural information. Due thereto, in this information processing device, by presenting the inclusion rate and this vehicle information to the user, the desire on the part of the user to collect vehicle information can be increased.

In an information processing device of a fourth aspect, in the third aspect, the presenting section presents the user with, among the vehicle information that is not included in the structural information, vehicle information whose degree of difficulty of collection is lower than a predetermined level.

In the information processing device of the fourth aspect, the presenting section presents the user with, among the vehicle information that is not included in the structural information, vehicle information whose degree of difficulty of collection is lower than a predetermined level. Due thereto, in this information processing device, the user can be made to know of vehicle information that is easy to collect, and the desire on the part of the user to collect vehicle information can be increased.

In an information processing device of a fifth aspect, in any one of the first through fourth aspects, the presenting section presents the user with a value of the structural information that improves by at least one of collecting of vehicle information that is not included in the structural information or updating of the vehicle information that is included in the structural information.

In the information processing device of the fifth aspect, the presenting section presents the user with the value of the structural information that improves by at least one of collecting of vehicle information that is not included in the structural information or updating of the vehicle information that is included in the structural information. Due thereto, in this information processing device, the user can understand the improved value of the structural information, and therefore, at least one of collecting of and updating of vehicle information by the user with the aim of improving the value of the structural information can be anticipated.

In an information processing device of a sixth aspect, in any one of the first through fifth aspects, the evaluating section evaluates the value of the structural information by using, as the predetermined evaluation standard, at least one of a category, contents, freshness or update frequency of the vehicle information that is included in the structural information.

In the information processing device of the sixth aspect, the evaluating section evaluates the value of the structural information by using, as the predetermined evaluation standard, at least one of the category, the contents, the freshness or the update frequency of the vehicle information that is included in the structural information. Due thereto, in this information processing device, the value of the structural information can be evaluated on the basis of the vehicle information included in the structural information.

In an information processing device of a seventh aspect, in any one of the first through sixth aspects, the acquiring section acquires the vehicle information to which is added identification information for identifying the vehicle.

In the information processing device of the seventh aspect, the acquiring section acquires the vehicle information to which is added identification information for identifying the vehicle. Due thereto, in this information processing device, because the vehicle and the structural information can be associated, the value of the vehicle that has that structural information can be evaluated.

In an information processing device of an eighth aspect, in any one of the first through seventh aspects, the value of the structural information is a monetary value at a time of selling the vehicle.

In the information processing device of the eighth aspect, the value of the structural information is a monetary value at a time of selling the vehicle. Due thereto, in this information processing device, the user of the vehicle can be made to know the monetary value at the time of selling the vehicle.

An information processing method of a ninth aspect: acquires vehicle information relating to a vehicle; evaluates a value of structural information, which includes the acquired vehicle information, by using a predetermined evaluation standard; and presents a user of the vehicle with the evaluated value of the structural information.

A tenth aspect is a non-transitory recording medium storing an information processing program. The information processing program causes a computer to execute processings of: acquiring vehicle information relating to a vehicle; evaluating a value of structural information, which includes the acquired vehicle information, by using a predetermined evaluation standard; and presenting a user of the vehicle with the evaluated value of the structural information.

The information processing device, information processing method and recording medium storing an information processing program relating to the present disclosure enable a user of a vehicle to understand the value of information relating to the vehicle.

### BRIEF DESCRIPTION OF THE DRAWINGS

Exemplary embodiments of the present disclosure will be described in detail based on the following figures, wherein:
Fig. 1 is a drawing illustrating the schematic structure of an information processing system relating to a present embodiment;
Fig. 2 is a block drawing illustrating hardware structures of a business terminal, a user terminal and a driver terminal relating to the present embodiment;
Fig. 3 is a block drawing illustrating the structure of a storage of the business terminal relating to the present embodiment;
Fig. 4 is a block drawing illustrating an example of functional structures of the business terminal relating to the present embodiment;
Fig. 5 is a block drawing illustrating hardware structures of a vehicle relating to the present embodiment;
Fig. 6 is a flowchart illustrating the flow of presenting processing by the business terminal relating to the present embodiment;
Fig. 7 is a first display example that is displayed on a monitor of the vehicle relating to the present embodiment;
Fig. 8 is a second display example that is displayed on the monitor of the vehicle relating to the present embodiment; and
Fig. 9 is a third display example that is displayed on the monitor of the vehicle relating to the present embodiment.

### DETAILED DESCRIPTION

An information processing system 10 relating to a present embodiment is described hereinafter.

The information processing system 10 relating to the present embodiment is a system for enabling a driver, who is an example of a user of a vehicle, to understand the value of information relating to the vehicle.

### (First Embodiment)

First, the information processing system 10 relating to the first embodiment is described.

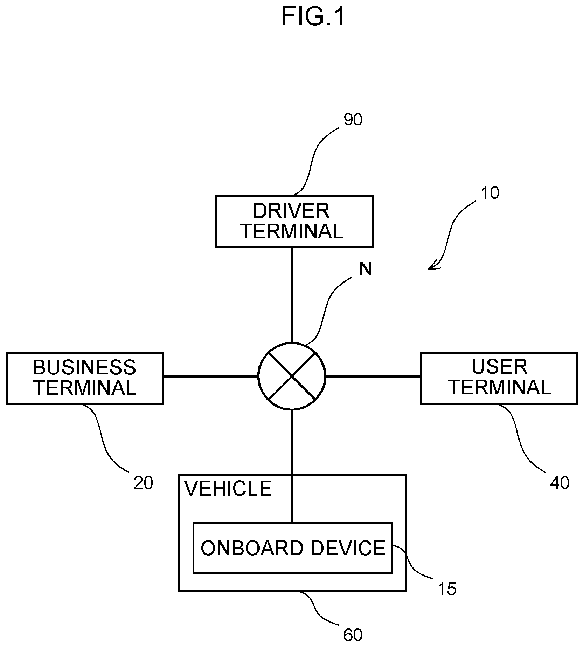

Fig. 1 is a drawing illustrating the schematic structure of the information processing system 10.

As illustrated in Fig. 1, the information processing system 10 includes a business terminal 20, a user terminal 40, a vehicle 60, and a driver terminal 90. The business terminal 20, the user terminal 40, an onboard device 15 installed in the vehicle 60, and the driver terminal 90 are connected via network N, and can communicate with one another.

The business terminal 20 that is an example of the information processing device is a server computer possessed by a predetermined business provider. The business terminal 20 acquires vehicle information relating to the vehicle 60 from the vehicle 60 and the driver terminal 90 via the network N. The business terminal 20 transmits the acquired vehicle information to the user terminal 40, and presents the vehicle information to a user who wishes to utilize the vehicle information. Users include maintenance service providers that carry out maintenance of vehicles, dealers that sell vehicles, insurance companies that handle insurance products relating to vehicles, and the like.

The user terminal 40 is a terminal possessed by the user. As described above, the user terminal 40 acquires vehicle information from the business terminal 20 via the network N.

The vehicle 60 may be any of an engine-powered vehicle, a hybrid vehicle, or an electric vehicle, and, in the present embodiment, the vehicle 60 is an engine-powered vehicle as an example. As described above, the vehicle 60 transmits vehicle information to the business terminal 20 via the network N.

The driver terminal 90 is a terminal that the driver possesses. As described above, the driver terminal 90 transmits vehicle information to the business terminal 20 via the network N. Examples of the user terminal 40 and the driver terminal 90 are general-purpose computers such as server computers, personal computers (PCs) and the like, portable personal computers (notebook PCs), smartphones, tablet devices, and the like. In the first embodiment, as an example, the user terminal 40 is a PC, and the driver terminal 90 is a smartphone.

Note that, in Fig. 1, only the one vehicle 60 is illustrated as the vehicle, only the one user terminal 40 is illustrated as the user terminal, and only the one driver terminal 90 is illustrated as the driver terminal 90. However, the present disclosure is not limited to this, and there may be a plurality of vehicles, user terminals and/or driver terminals.

In the information processing system 10, as an example, the vehicle information is managed by using blockchain technology. Due thereto, in the information processing system 10, the vehicle information can be shared on blockchains between the business terminal 20, the user terminal 40, the onboard device 15 installed in the vehicle 60 and the driver terminal 90, and between a plurality of the user terminals 40, and between a plurality of the onboard devices 15, and between a plurality of the driver terminals 90, and the like.

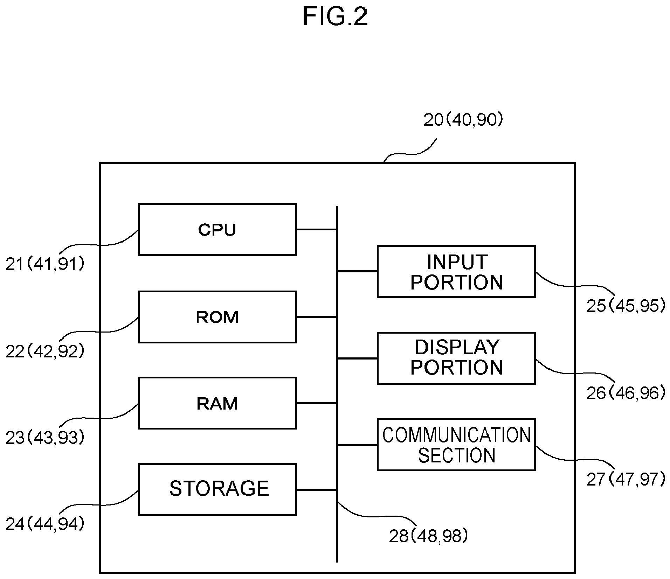

The hardware structures of the business terminal 20, the user terminal 40 and the driver terminal 90 are described next. Fig. 2 is a block drawing illustrating the hardware structures of the business terminal 20, the user terminal 40 and the driver terminal 90. Note that, because the business terminal 20, the user terminal 40 and the driver terminal 90 basically are general computer structures, the business terminal 20 is described as a representative example.

As illustrated in Fig. 2, the business terminal 20 has a CPU 21 (Central Processing Unit), a ROM 22 (Read Only Memory), a RAM 23 (Random Access Memory), a storage 24, an input portion 25, a display portion 26 and a communication section 27. These respective structures are connected so as to be able to communicate with one another through bus 28.

The CPU 21 is a central computing processing unit, and executes various programs and controls the respective sections. Namely, the CPU 21 reads-out programs from the ROM 22 and the storage 24, and executes the programs by using the RAM 23 as a workspace. The CPU 21 carries out control of the above-described respective structures, and various types of computing processings, in accordance with the programs recorded in the ROM 22 and the storage 24.

The ROM 22 stores various programs and various data. The RAM 23 temporarily stores programs and data as a workspace.

The storage 24 is structured by a storage device such as an HDD (Hard Disk Drive), an SSD (Solid State Drive), a flash memory or the like, and stores various programs and various data.

The input portion 25 includes a pointing device such as a mouse or the like, a keyboard, a microphone, a camera and the like, and is used in order to carry out various types of input.

The display portion 26 is a liquid crystal display for example, and displays various information. The display portion 26 may function as the input portion 25 by utilizing a touch-panel-type display therefor.

The communication section 27 is an interface for communicating with other equipment. For example, wired communication standards such as Ethernet^{®}, FDDI, or the like, or wireless communication standards such as 4G, 5G, Wi-Fi^{®} or the like, are used in this communication.

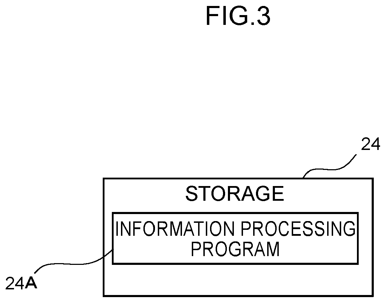

Fig. 3 is a block drawing illustrating the structure of the storage 24 of the business terminal 20.

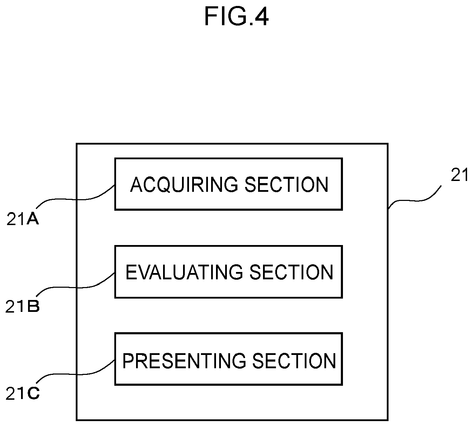

As illustrated in Fig. 3, an information processing program 24A for causing the CPU 21 of the business terminal 20 to function as the functional structures that are illustrated in Fig. 4 and described later, is stored in the storage 24. At the time of executing this information processing program 24A, the business terminal 20 executes processings based on the information processing program 24A by using the hardware resources illustrated in Fig. 2.

The functional structures of the business terminal 20 are described next.

Fig. 4 is a block drawing illustrating an example of the functional structures of the business terminal 20.

As illustrated in Fig. 4, the CPU 21 of the business terminal 20 has an acquiring section 21A, an evaluating section 21B and a presenting section 21C as the functional structures thereof. These respective functional structures are realized by the CPU 21 reading-out the information processing program 24A stored in the storage 24, and executing the program. The CPU 21 is an example of the processor.

The acquiring section 21A acquires vehicle information. As an example, the acquiring section 21A acquires, as the vehicle information, the steering angle, acceleration, vehicle speed and turn signal operation of the vehicle 60 that are detected by a steering angle sensor 71, an acceleration sensor 72, a vehicle speed sensor 73 and a turn signal switch 74 of the vehicle 60 that are described later. Further, the acquiring section 21A acquires, as vehicle information, the engine speed, the engine torque, the fuel consumption, acceleration operation, and the on/off state of an unillustrated ignition switch of the vehicle 60, which are detected by an ECU 70C of the vehicle 60 that is described later. Moreover, the acquiring section 21A acquires, as vehicle information, information relating to maintenance of the vehicle 60, information relating to damage to the vehicle body, and information relating to dirtying of the vehicle 60 that are inputted by operation of an input switch 77 or a monitor 78 of the vehicle 60 that are described later. In addition, the acquiring section 21A acquires, as vehicle information, images relating to the vehicle 60 that are captured by an unillustrated camera of the driver terminal 90.

Here, the vehicle 60 and the driver terminal 90 transmit vehicle information, to which is added identification information for identifying the vehicle 60, to the business terminal 20. Due thereto, the acquiring section 21A acquires the vehicle information to which this identification information is added. Note that the above-described information are some of the vehicle information that the acquiring section 21A can acquire from the vehicle 60 and the driver terminal 90, and the acquiring section 21A acquires information relating to the vehicle 60, which are other than the above-described information, from the vehicle 60 and the driver terminal 90 as vehicle information.

The evaluating section 21B evaluates the value of structural information, which includes the vehicle information acquired by the acquiring section 21A, by using predetermined evaluation standards. The structural information is the aggregate of plural vehicle information that are acquired from the vehicle 60 and the driver terminal 90. The value of the structural information may be any of a functional value, a monetary value, a social value, a psychological value or the like. In the first embodiment, as an example, this value is the "sales value of the vehicle 60" that is the monetary value at the time when the vehicle 60 is sold. The sales value of the vehicle 60 is the amount of increase in the sales price of the vehicle 60 that is expected to improve on the basis of there being structural information, at the time when the vehicle 60 is sold to a vehicle purchasing agent.

Further, the evaluating section 21B evaluates the sales value of the vehicle by using, as a predetermined evaluation standard, the inclusion rate that is the proportion of vehicle information included in the structural information among vehicle information that can be included in the structural information. The vehicle information that can be included in the structural information can also be called vehicle information that the business terminal 20 can acquire from the vehicle 60 and the driver terminal 90. Further, the vehicle information that is included in the structural information can also be called the vehicle information that the business terminal 20 has acquired from the vehicle 60 and the driver terminal 90. As an example, in a case in which the number of vehicle information that can be included in the structural information is "100", if there are "70" items of vehicle information that are included in the structural information, the inclusion rate is "70%".

Moreover, the evaluating section 21B evaluates the sales value of the vehicle 60 by using, as predetermined evaluation standards, the category, contents, freshness and update frequency of the vehicle information included in the structural information.

As an example, in the same way as the number of vehicle information that can be included in the structural information, there are 100 types of categories of vehicle information such as information A, information B, information C, information D, and the like. The contents of the vehicle information are, for example, specific contents such as the maintenance history of the vehicle 60, the absence/presence of damage to the vehicle body, the absence/presence of dirtying of the vehicle 60, and the like. The freshness of the vehicle information is, as an example, the date and time when that vehicle information was acquired. The update frequency of the vehicle information is, as an example, the number of times that that vehicle information has been updated within a predetermined time period.

As an example, the evaluating section 21B evaluates the sales value of the vehicle 60 as follows by using the inclusion rate, and the category, contents, freshness and update frequency of the vehicle information included in the structural information.

First, the evaluating section 21B gives, to each of the vehicle information included in the structural information, a basic score (e.g., 0.6), which is based on that vehicle information having been collected.

Next, on the basis of the category, contents, freshness and update frequency of the vehicle information included in the structural information, the evaluating section 21B adds or deducts points to or from the basic score and computes a score for each of the vehicle information. In the first embodiment, reasons to add points and reasons to deduct points are set in advance for each of the category, contents, freshness and update frequency of the vehicle information. Then, in a case in which the category, contents, freshness or update frequency of the vehicle information corresponds to a reason to add points, the evaluating section 21B adds a predetermined number of points to the basic score, and, in a case of corresponding to a reason to deduct points, the evaluating section 21B deducts a predetermined number of points from the basic score. As an example, on the basis of the date and time when the vehicle information was acquired, in a case in which the freshness of that vehicle information is good and corresponds to a reason to add points, the evaluating section 21B adds "0.1 points" to the basic score. In a case in which the freshness of that vehicle information is poor and corresponds to a reason to deduct points, the evaluating section 21B deducts "0.1 points" from the basic score. Note that, in the first embodiment, the maximum number of points of the vehicle information is "1 point", and the minimum is "0.2 points".

Finally, the evaluating section 21B totals the computed numbers of points of the respective vehicle information, and computes the score of the structural information. In the first embodiment, monetary amounts corresponding to respective numbers of points of the structural information, such as 60 points, 70 points, 80 points and the like, are determined in advance. The evaluating section 21B evaluates the sales value of the vehicle 60 by the monetary amount corresponding to the computed score of the structural information.

The presenting section 21C presents the driver with the sales value of the vehicle 60 that has been evaluated by the evaluating section 21B. Further, the presenting section 21C presents the driver with the inclusion rate, the vehicle information that is included in the structural information, and vehicle information that is not included in the structural information. Moreover, the presenting section 21C presents the driver with the sales value of the vehicle 60 that will be improved by at least one of collecting vehicle information that is not included in the structural information or updating the vehicle information that is included in the structural information. As an example, the presenting section 21C presents the above-described respective information to the driver by displaying the respective information on the monitor 78 of the vehicle 60. Note that examples of display on the monitor 78 are described later.

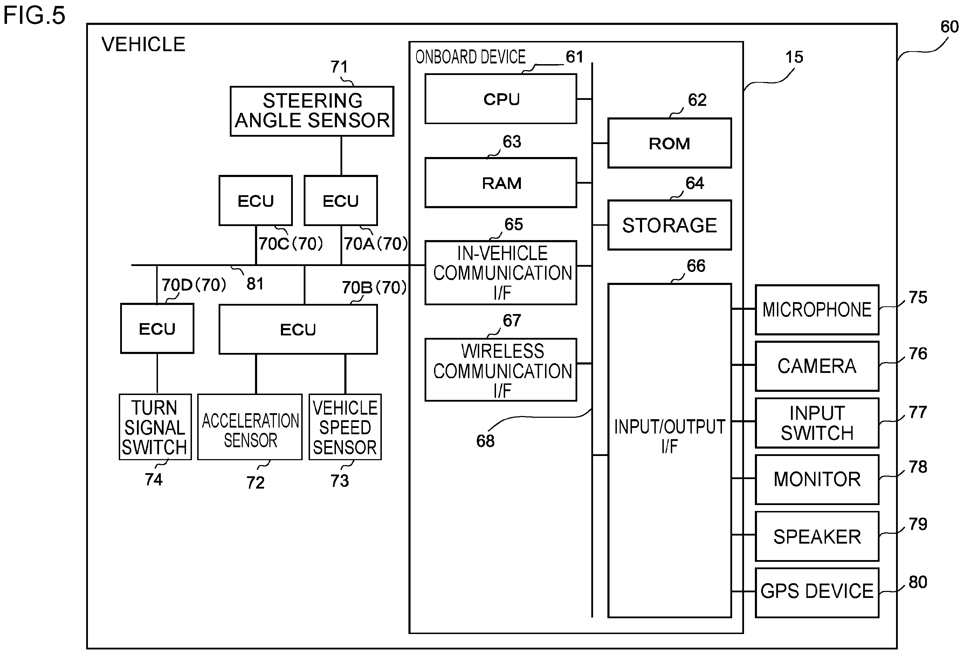

Hardware structures of the vehicle 60 are described next. Fig. 5 is a block drawing illustrating the hardware structures of the vehicle 60.

As illustrated in Fig. 5, the vehicle 60 is structured to include the onboard device 15, a plurality of ECUs (Electronic Control Units) 70, the steering angle sensor 71, the acceleration sensor 72, the vehicle speed sensor 73, the turn signal switch 74, a microphone 75, a camera 76, the input switch 77, the monitor 78, a speaker 79, and a GPS device 80.

The onboard device 15 is structured to include a CPU 61, a ROM 62, a RAM 63, a storage 64, an in-vehicle communication I/F (InterFace) 65, an input/output I/F 66, and a wireless communication I/F 67. The CPU 61, the ROM 62, the RAM 63, the storage 64, the in-vehicle communication I/F 65, the input/output I/F 66 and the wireless communication I/F 67 are connected so as to be able to communicate with one another via an internal bus 68.

The CPU 61 is a central computing processing unit, and executes various programs and controls the respective sections. Namely, the CPU 61 reads-out programs from the ROM 62 and the storage 64, and executes the programs by using the RAM 63 as a workspace. The CPU 61 carries out control of the above-described respective structures, and various types of computing processings, in accordance with the programs recorded in the ROM 62 and the storage 64.

The ROM 62 stores various programs and various data. The RAM 63 temporarily stores programs and data as a workspace.

The storage 64 is structured by a storage device such as an HDD, an SSD, a flash memory or the like, and stores various programs and various data.

The in-vehicle communication I/F 65 is an interface for connection with the ECUs 70. Communication standards in accordance with CAN protocol are used at this interface. The in-vehicle communication I/F 65 is connected to an external bus 81.

The plural ECUs 70 are provided for the functions of the vehicle 60, respectively. In the first embodiment, an ECU 70A, an ECU 70B, the ECU 70C and an ECU 70D are provided. An ECU for electric power steering is an example of the ECU 70A, and the steering angle sensor 71 is connected to the ECU 70A. An ECU for VSC (Vehicle Stability Control) is an example of the ECU 70B, and the acceleration sensor 72 and the vehicle speed sensor 73 are connected to the ECU 70B. Note that, in addition to the acceleration sensor 72 and the vehicle speed sensor 73, a yaw rate sensor may be connected to the ECU 70B.

An engine ECU is an example of the ECU 70C, and detects the engine speed and engine torque of the vehicle 60 in order to control the engine. Further, the ECU 70C detects the fuel consumption on the basis of the fuel flow rate that is acquired from unillustrated sensors. Moreover, the ECU 70C detects acceleration operations of the vehicle 60. The engine speed, engine torque, fuel consumption and acceleration operations, and the on/off state of the ignition switch that are detected by the ECU 70C are stored in the storage 64, and are transmitted to the business terminal 20 as vehicle information. Further, a steering ECU is an example of the ECU 70D, and the turn signal switch 74 is connected to the ECU 70D. The turn signal switch 74 is provided at the steering column in order to operate the turn signals. The ECU 70D detects the operation of the turn signal switch 74 by the driver as a turn signal operation. The turn signal operation detected by the ECU 70D is stored in the storage 64, and is transmitted to the business terminal 20 as vehicle information.

The steering angle sensor 71 is a sensor for detecting the steering angle of the steering wheel. The steering angle detected by the steering angle sensor 71 is stored in the storage 64, and is transmitted to the business terminal 20 as vehicle information.

The acceleration sensor 72 is a sensor for detecting acceleration applied to the vehicle 60. As an example, the acceleration sensor 72 is a triaxial acceleration sensor, and detects accelerations applied in the vehicle longitudinal direction serving as the X-axis direction, the vehicle transverse direction serving as the Y-axis direction, and the vehicle height direction serving as the Z-axis direction. The acceleration detected at the acceleration sensor 72 is stored in the storage 64, and is transmitted to the business terminal 20 as vehicle information.

The vehicle speed sensor 73 is a sensor for detecting the speed of the vehicle 60. For example, the vehicle speed sensor 73 is a sensor provided at a wheel. The vehicle speed detected at the vehicle speed sensor 73 is stored in the storage 64, and is transmitted to the business terminal 20 as vehicle information.

The input/output I/F 66 is an interface for communicating with the microphone 75, the camera 76, the input switch 77, the monitor 78, the speaker 79 and the GPS device 80 that are installed in the vehicle 60.

The microphone 75 is provided at a front pillar or the dashboard or the like of the vehicle 60, and is a device for collecting sounds emitted by the driver of the vehicle 60. Note that the microphone 75 may be provided at the camera 76 that is described hereafter.

The camera 76 is an imaging device that carries out imaging by using an imaging element such as, for example, a CCD (Charge Coupled Device) image sensor or a CMOS (Complementary Metal Oxide Semiconductor) image sensor or the like. As an example, the camera 76 is provided at the front portion of the vehicle 60, and captures images of the region ahead of the vehicle. The images captured by the camera 76 are used, for example, in order to identify the inter-vehicle distance between the vehicle 60 and a preceding vehicle driving ahead of the vehicle 60, the lanes, traffic signals, and the like. Note that the camera 76 may be connected to the onboard device 15 via the ECU 70 (e.g., a camera ECU).

The input switch 77 is provided at the instrument panel, the center console, the steering wheel or the like, and is a switch for input of operations by the fingers of the driver. For example, a push-button-type ten key, a touch pad, or the like can be employed as the input switch 77.

The monitor 78 is provided at the instrument panel or the meter panel or the like, and is a liquid crystal monitor for proposing operations relating to functions of the vehicle 60, and displaying images relating to explanation of these functions. The monitor 78 may be provided as a touch panel that also serves as the input switch 77. Here, the information relating to maintenance of the vehicle 60, the information relating to damage to the vehicle body, and the information relating to dirtying of the vehicle 60 that are inputted by operation of the input switch 77 or the monitor 78 are stored in the storage 64, and are transmitted to the business terminal 20 as vehicle information.

The speaker 79 is provided at the instrument panel, the center console, a front pillar, the dashboard or the like, and is a device for proposing operations relating to functions of the vehicle 60, and outputting sounds relating to explanation of these functions. Note that the speaker 79 may be provided at the monitor 78.

The GPS device 80 is a device that measures the current position of the vehicle 60. The GPS device 80 includes an unillustrated antenna that receives signals from GPS satellites. Note that the GPS device 80 may be connected to the onboard device 15 through a car navigation system that is connected to the ECU 70 (e.g., a multimedia ECU).

The wireless communication I/F 67 is a wireless communication module for communicating with other equipment. Communication standards such as, for example, 5G, LTE, Wi-Fi^{®} or the like are used at this wireless communication module. The wireless communication I/F 67 is connected to the network N.

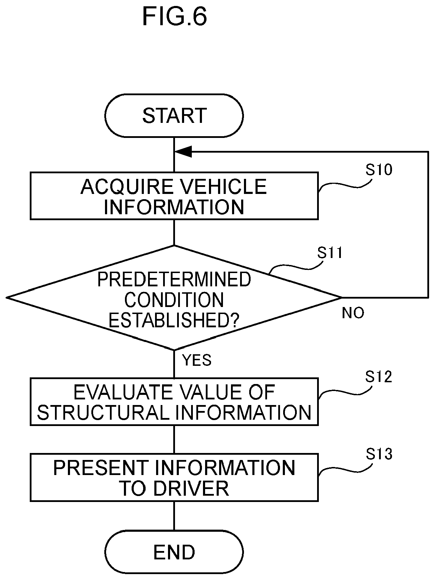

Fig. 6 is a flowchart illustrating the flow of presenting processing that presents the driver with the sales value of the vehicle 60 that has been evaluated by the business terminal 20. The presenting processing is carried out due to the CPU 21 reading-out the information processing program 24A from the storage 24, and expanding and executing the program in the RAM 23. As an example, the presenting processing is started in a case in which the ignition switch of the vehicle 60 is turned on.

In step S10 illustrated in Fig. 6, the CPU 21 acquires vehicle information from the vehicle 60 or the driver terminal 90. Then, the CPU 21 moves on to step S11. In the first embodiment, as an example, vehicle information is transmitted periodically from the vehicle 60 or the driver terminal 90 to the business terminal 20.

In step S11, the CPU 21 judges whether or not a predetermined condition is established. If the predetermined condition is established (step S11: YES), the CPU 21 moves on to step S12. On the other hand, if it is judged by the CPU 21 that the predetermined condition is not established (step S11: NO), the CPU 21 returns to step S10. As an example, the CPU 21 judges that the predetermined condition is established in a case in which the ignition switch of the vehicle 60 is turned off.

In step S12, the CPU 21 evaluates the value of the structural information that is structured to include the vehicle information acquired in step S10, and more specifically, judges the sales value of the vehicle 60, by using a predetermined evaluation standard. Then, the CPU 21 moves on to step S13.

In step S13, the CPU 21 presents information to the driver. Specifically, the CPU 21 displays on the monitor 78 and presents to the driver the sales value of the vehicle 60 evaluated in step S12, the inclusion rate, the vehicle information that is included in the structural information, the vehicle information that is not included in the structural information, and the sales value of the vehicle 60 that is improved by at least one of collecting the vehicle information that is not included in the structural information or updating the vehicle information that is included in the structural information. Then, the CPU 21 ends the presenting processing.

Display examples that are based on the presenting processing illustrated in Fig. 6 are described next.

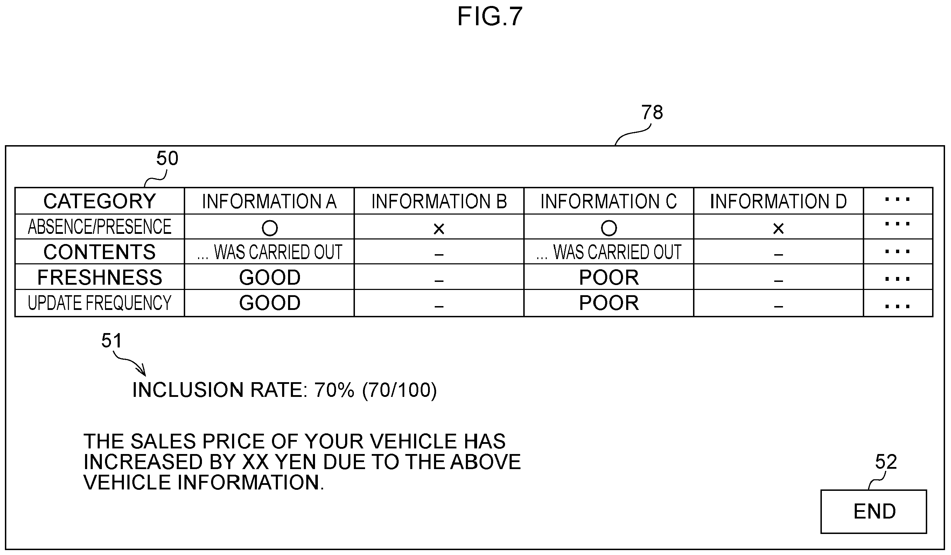

Fig. 7 is a first display example that is displayed on the monitor 78 of the vehicle 60. As an example, the CPU 21 of the business terminal 20 causes the monitor 78 to display the screen illustrated in Fig. 7 in a case in which the ignition switch of the vehicle 60 is turned off.

An information display portion 50, a message display portion 51, and an end button 52 are displayed in the display example illustrated in Fig. 7.

The information display portion 50 is a portion that shows the vehicle information. As an example, "category", "absence/presence", "contents", "freshness", and "update frequency" are provided in the information display portion 50 illustrated in Fig. 7 as items corresponding to the vehicle information. Note that the items are not limited to the above-described types, and other types of items may be provided.

Categories of the vehicle information are displayed as "category" items as information A, information B, information C, information D and the like. In the first embodiment, the respective vehicle information that are displayed as the "category" items are vehicle information that can be included in the structural information.

The absence or presence of collection of the vehicle information displayed as "category" items is displayed as "absence/presence" items. In the first embodiment, the "○" as the "absence/presence" item means that vehicle information has been collected, i.e., that that vehicle information is included in the structural information. Further, the "×" as the "absence/presence" item means that vehicle information has not been collected, i.e., that that vehicle information is not included in the structural information. In this way, vehicle information that is included in the structural information, and vehicle information that is not included in the structural information, are displayed as "absence/presence" items.

The specific contents of the respective vehicle information that are displayed as "category" items are displayed as "contents" items. However, information at which the corresponding "absence/presence" item is an "×" are displayed as "-" as the "contents" item.

The quality of the freshness of the vehicle information is displayed as "freshness" items as "good", "average", "poor" and the like. However, information at which the corresponding "absence/presence" item is an "×" are displayed as "-" as the "freshness" item.

The quality of the update frequency of the vehicle information is displayed as "update frequency" items as "good", "average", "poor" and the like. However, information at which the corresponding "absence/presence" item is an "×" are displayed as "-" as the "update frequency" item.

The message display portion 51 is a portion in which various messages for the driver are shown. As an example, in Fig. 7, the message "Inclusion Rate: 70% (70/100) The sales price of your vehicle has increased by XX yen due to the above vehicle information." is displayed in the message display portion 51. The inclusion rate and the sales value of the vehicle 60 are displayed in the message display portion 51 in this way.

The end button 52 is a button for changing the displayed contents of the monitor 78 to a predetermined screen.

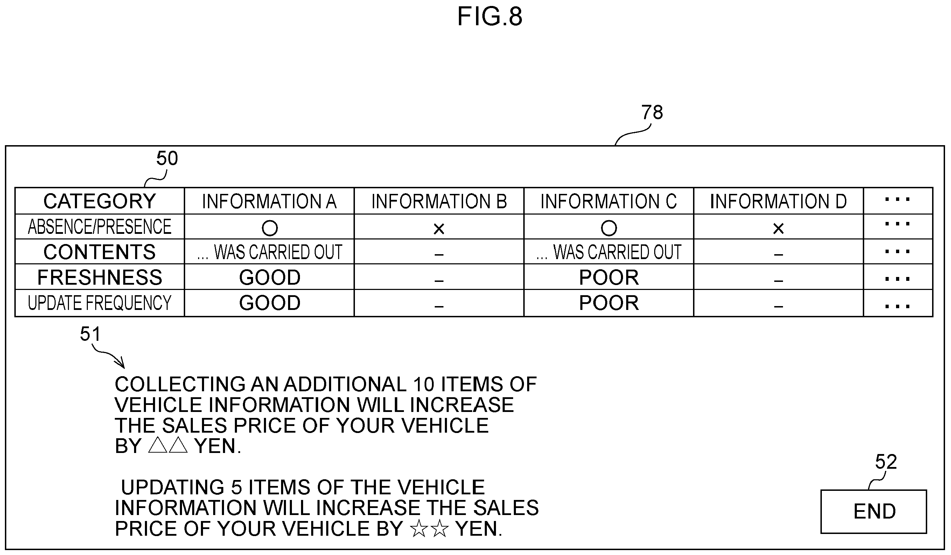

Fig. 8 is a second display example that is displayed on the monitor 78 of the vehicle 60. As an example, the CPU 21 of the business terminal 20 causes the monitor 78 to display the screen illustrated in Fig. 8 in a case in which, after the display example illustrated in Fig. 7 is displayed, a predetermined time period elapses without the end button 52 being operated.

The information display portion 50, the message display portion 51 and the end button 52 are displayed in the display example illustrated in Fig. 8. Note that the contents displayed in the information display portion 50 illustrated in Fig. 8 are the same as those of the information display portion 50 illustrated in Fig. 7.

As an example, in Fig. 8, the message "Collecting an additional 10 items of vehicle information will raise the sales price of your vehicle by △△ yen. Updating 5 items of vehicle information will raise the sales price of your vehicle by ☆☆ yen." is displayed in the message display portion 51. In this way, the sales value of the vehicle 60 that is improved by at least one of collecting vehicle information not included in the structural information or updating vehicle information included in the structural information is displayed in the message display portion 51.

As described above, at the business terminal 20, the CPU 21 acquires vehicle information relating to the vehicle 60. Further, the CPU 21 evaluates the value of the structural information, which includes the acquired vehicle information, by using a predetermined evaluation standard. Then, the CPU 21 presents the evaluated value of the structural information to the driver. The value of the structural information is the sales value of the vehicle 60. Due thereto, at the business terminal 20, the driver can be made to know the sales value of the vehicle 60 as the value of the structural information.

Further, at the business terminal 20, the CPU 21 evaluates the sales value of the vehicle 60 by using, as a predetermined evaluation standard, the inclusion rate that is the proportion of the vehicle information included in the structural information, among vehicle information that can be included in the structural information. Due thereto, at the business terminal 20, the greater the number of vehicle information that are included in the structural information, the higher the sales value of the vehicle 60 can become.

Further, at the business terminal 20, the CPU 21 evaluates the sales value of the vehicle 60 by using, as predetermined evaluation standards, the category, contents, freshness and update frequency of the vehicle information included in the structural information. Due thereto, at the business terminal 20, the sales value of the vehicle 60 can be evaluated on the basis of the vehicle information included in the structural information.

At the business terminal 20, the CPU 21 presents the driver with the inclusion rate, the vehicle information that is included in the structural information, and vehicle information that is not included in the structural information. Due thereto, at the business terminal 20, by presenting the inclusion rate and these vehicle information, the desire on the part of the driver to collect vehicle information can be increased.

Further, at the business terminal 20, the CPU 21 presents the driver with the sales value of the vehicle 60 that is improved by at least one of the collecting vehicle information that is not included in the structural information or updating vehicle information that is included in the structural information. Due thereto, at the business terminal 20, the driver can understand the improved sales value of the vehicle 60, and therefore, at least one of collecting of and updating of vehicle information by the driver with the aim of improving the sales value of the vehicle 60 can be anticipated.

Moreover, at the business terminal 20, the CPU 21 acquires vehicle information to which identification information for identifying the vehicle 60 has been added. Due thereto, at the business terminal 20, the vehicle 60 and the structural information can be associated, and therefore, the value of the vehicle 60 that has that structural information can be evaluated.

### (Second Embodiment)

Next, a second embodiment is described while omitting or simplifying parts that are redundant with other embodiments.

In the second embodiment, the presenting section 21C presents the driver with the inclusion rate and the vehicle information that is not included in the structural information, which is different than in the first embodiment. Then, the presenting section 21C presents the driver with, among the vehicle information that is not included in the structural information, vehicle information whose degree of difficulty of collection is lower than a predetermined level.

The degree of difficulty of collecting vehicle information is divided into plural levels on the basis of at least one element such as the economic burden or the time burden or the like on the driver. As an example, the degree of difficulty is divided into three levels that are "easy", "average" whose degree of difficulty is higher than "easy", and "hard" whose degree of difficulty is higher than "average". Further, as an example, the presenting section 21C presents the driver with, among the vehicle information that are not included in the structural information, vehicle information whose degrees of difficulty are "easy" which is lower than "average".

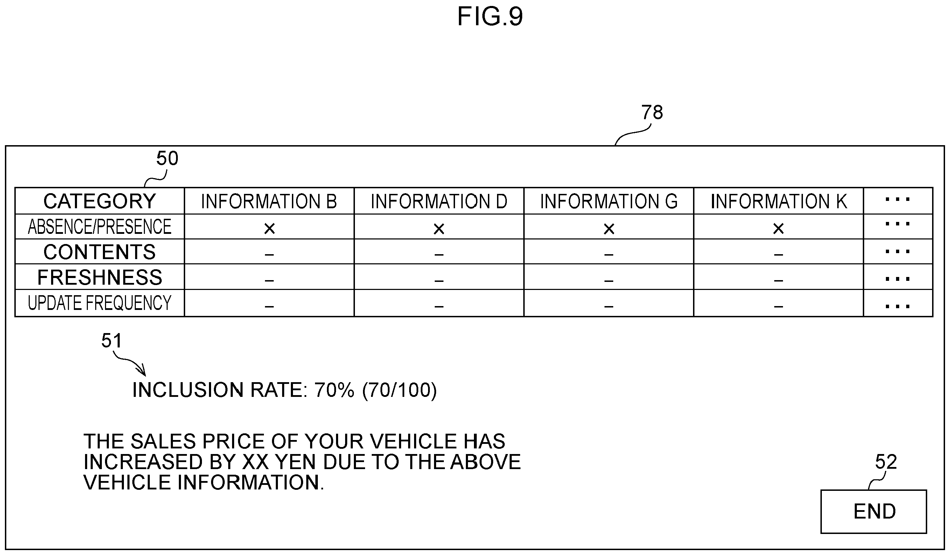

Fig. 9 is a third display example that is displayed on the monitor 78 of the vehicle 60. As an example, the CPU 21 of the business terminal 20 causes the monitor 78 to display the screen illustrated in Fig. 9 in a case in which the ignition switch of the vehicle 60 is turned off.

The information display portion 50, the message display portion 51 and the end button 52 are displayed in the display example illustrated in Fig. 9. Note that the message in the message display portion 51 illustrated in Fig. 9 is the same as that of Fig. 7.

As an example, only the vehicle information whose degrees of difficulty of collection are "easy", among the vehicle information that are not included in the structural information, are displayed as the "category" items of the information display portion 50 illustrated in Fig. 9 as information B, information D, information G, information K, and the like.

As described above, at the business terminal 20, the CPU 21 presents the driver with, among the vehicle information that is not included in the structural information, vehicle information whose degree of difficulty of collection is lower than a predetermined level. Due thereto, at the business terminal 20, the driver can be made to know of the vehicle information that is easy to collect, and the desire on the part of the driver to collect vehicle information can be increased.

### (Other Points)

In the above-described embodiments, the business terminal 20 is an example of the information processing device, but the present disclosure is not limited to this, and the onboard device 15 that is installed in the vehicle 60 may be an example of the information processing device. Namely, the information processing system 10 is not limited to a structure of transmitting, to the user terminal 40, the vehicle information that the business terminal 20 acquires from the vehicle 60 and the driver terminal 90. The information processing system 10 may be structured such that vehicle information collected by the vehicle 60 and vehicle information acquired from the driver terminal 90 are transmitted from the vehicle 60 to the user terminal 40.

Although the driver is an example of the user of the vehicle in the above-described embodiments, the present disclosure is not limited to this, and the owner of the vehicle who is other than the driver may be an example of the user of the vehicle.

In the above-described embodiments, at the information processing system 10, the vehicle information is shared on a blockchain among the business terminal 20, the user terminal 40, the onboard device 15 installed in the vehicle 60, and the driver terminal 90. However, the present disclosure is not limited to this. A common application may be installed in the business terminal 20, the user terminal 40, the vehicle 60 and the driver terminal 90, and the vehicle information may be shared on this application.

In the above-described embodiments, the sales value of the vehicle 60 is evaluated by using, as predetermined evaluation standards, the category, the contents, the freshness and the update frequency of the vehicle information that are included in the structural information. However, the predetermined evaluation standards are not limited to these. The sales value of the vehicle 60 may be evaluated by using, as the predetermined evaluation standard, at least one of the category, contents, freshness or update frequency of the vehicle information included in the structural information such as, for example, only the category and the contents of the vehicle information, or only the freshness of the vehicle information, or the like.

In the above-described embodiments, the driver is presented with the respective information, such as the evaluated sales value of the vehicle 60 and the inclusion rate and the like, due to the monitor 78 of the vehicle 60 being made to display the information. However, the method of presenting information to the driver is not limited to this. For example, the above-described, respective information may be presented to the driver by being displayed on a display portion 96 of the driver terminal 90, instead of or in addition to display on the monitor 78.

In the above-described embodiments, the CPU 61 of the onboard device 15 illustrated in Fig. 5 may function as at least some of the above-described functional structures of the CPU 21 of the business terminal 20 that are illustrated in Fig. 4. In this case, the presenting processing illustrated in Fig. 6 is executed by one processor that is the CPU 21 of the business terminal 20 or the CPU 61 of the onboard device 15, or is executed by a combination of plural processors that are the CPU 21 of the business terminal 20 and the CPU 61 of the onboard device 15.

Note that any of various types of processors other than a CPU may execute the presenting processing that is executed due to the CPU 21 reading-in software (a program) in the above-described embodiments. Examples of processors in this case include PLDs (Programmable Logic Devices) whose circuit structure can be changed after production such as FPGAs (Field-Programmable Gate Arrays) and the like, and dedicated electrical circuits that are processors having circuit structures that are designed for the sole purpose of executing specific processings such as ASICs (Application Specific Integrated Circuits) and the like, and the like. Further, the presenting processing may be executed by one of these various types of processors, or may be executed by a combination of two or more of the same type or different types of processors (e.g., plural FPGAs, or a combination of a CPU and an FPGA, or the like). Further, the hardware structures of these various types of processors are, more specifically, electrical circuits that combine circuit elements such as semiconductor elements and the like.

The above embodiments describe a form in which the information processing program 24A is stored in advance (is installed) in the storage 24, but the present disclosure is not limited to this. The information processing program 24A may be provided in a form of being recorded on a recording medium such as a CD-ROM (Compact Disk Read Only Memory, a DVD-ROM (Digital Versatile Disk Read Only Memory), a USB (Universal Serial Bus) memory, or the like. Further, the information processing program 24A may be in a form of being downloaded from an external device over the network N.

## Claims

1. An information processing device (20) comprising:
an acquiring section (21A) acquiring vehicle information relating to a vehicle (60);
an evaluating section (21B) evaluating a value of structural information, which includes the vehicle information acquired by the acquiring section (21A), by using a predetermined evaluation standard; and
a presenting section (21C) presenting a user of the vehicle (60) with the value of the structural information evaluated by the evaluating section (21B).

2. The information processing device (20) of claim 1, wherein the evaluating section (21B) evaluates the value of the structural information by using, as the predetermined evaluation standard, an inclusion rate that is a proportion of the vehicle information included in the structural information, among vehicle information that can be included in the structural information.

3. The information processing device (20) of claim 2, wherein the presenting section (21C) presents the user with the inclusion rate and vehicle information that is not included in the structural information.

4. The information processing device (20) of claim 3, wherein the presenting section (21C) presents the user with, among the vehicle information that is not included in the structural information, vehicle information whose degree of difficulty of collection is lower than a predetermined level.

5. The information processing device (20) of any one of claim 1 through claim 4, wherein the presenting section (21C) presents the user with a value of the structural information that improves by at least one of collecting of vehicle information that is not included in the structural information or updating of the vehicle information that is included in the structural information.

6. The information processing device (20) of any one of claim 1 through claim 5, wherein the evaluating section (21B) evaluates the value of the structural information by using, as the predetermined evaluation standard, at least one of a category, contents, freshness or update frequency of the vehicle information that is included in the structural information.

7. The information processing device (20) of any one of claim 1 through claim 6, wherein the acquiring section (21A) acquires the vehicle information, to which is added identification information for identifying the vehicle (60).

8. The information processing device (20) of any one of claim 1 through claim 7, wherein the value of the structural information is a monetary value at a time of selling the vehicle (60).

9. The information processing device (20) of claim 8, wherein the monetary value is an amount of increase in a sales price of the vehicle (60) whose improvement is anticipated based on having the structural information at the time of selling the vehicle (60).

10. An information processing method comprising a computer executing processing comprising:
acquiring vehicle information relating to a vehicle (60);
evaluating a value of structural information, which includes the acquired vehicle information, by using a predetermined evaluation standard; and
presenting a user of the vehicle (60) with the evaluated value of the structural information.

11. A non-transitory recording medium storing an information processing program (24A) executable by a computer to perform processing comprising:
acquiring vehicle information relating to a vehicle (60);
evaluating a value of structural information, which includes the acquired vehicle information, by using a predetermined evaluation standard; and
presenting a user of the vehicle (60) with the evaluated value of the structural information.
